# EUROPÄISCHE PATENTSCHRIFT

(11) **EP 0 791 527 B1**
(45) Veröffentlichungstag und Bekanntmachung des Hinweises auf die Patenterteilung: **03.05.2000**
(21) Anmeldenummer: 97103062.2
(22) Anmeldetag: 26.02.1997
(51) Int. Cl.: B62D 27/02

(54) **Verbindung von flächigen Kunststoffteilen**
Connection of flat plastic parts
Connexion d'éléments plans en matière plastique

(30) Priorität: 26.02.1996 DE 19606958
(43) Veröffentlichungstag der Anmeldung: 27.08.1997
(73) Patentinhaber: DYNAMIT NOBEL KUNSTSTOFF GmbH, 53840 Troisdorf (DE)
(72) Erfinder: Kamm, Artur, 91757 Treuchtlingen (DE); Leng, Robert, 91781 Weissenburg (DE)

(56) Entgegenhaltungen:
- DE-A- 3 737 210
- DE-A- 3 806 091

## Beschreibung

Die Erfindung betrifft eine Verbindung von flächigen Kunststoffteilen nach dem Oberbegriff des Anspruchs 1, wie sie beispielsweise aus DE-A-3 737 210 bekannt ist.

In zunehmendem Maße werden Karosseriebereiche an Kraftfahrzeugen aus Kunststoff gefertigt. Bei der Verbindung von Kunststoffteilen untereinander besteht die Forderung, daß ein gleichmäßiger Fugenverlauf gesichert ist. Außerdem dürfen von außen keine Schraubverbindungen oder dgl. sichtbar sein. Die Verbindung ist dabei so auszulegen, daß sie bei Reparatur und Austausch lösbar ist. Ferner muß die Verbindung Dimensionsänderungen z.B. aus Temperaturbelastungen ausgleichen und so gestaltet sein, daß Klappergeräusche vermieden werden.

Der Erfindung liegt die Aufgabe zugrunde, eine Verbindung von zwei flächigen Kunststoffteilen, insbesondere an Kraftfahrzeugen, so zu gestalten, daß alle oben genannten Forderungen erfüllt sind.

Erfindungsgemäß wird diese Aufgabe dadurch gelöst,
- daß sich die beiden Kunststoffteile im Verbindungsbereich überlappen, wobei der Überlappungsbereich des Mutterteils um die Materialdicke des Vaterteils abgesenkt ist, so daß sich eine von Außen glatte Oberfläche ergibt,
- daß im Überlappungsbereich des Mutterteils parallel zur Fugenkante Durchbrüche angeordnet sind,
- daß am Vaterteil im Bereich der Fugenkante senkrechte Haltelaschen angeordnet sind, die durch die Durchbrüche im Mutterteil ragen und
- daß im Überlappungsbereich auf der Unterseite des Mutterteils Befestigungselemente mit achsialer Federwirkung die Haltelaschen in Verbindungsrichtung kraftbeaufschlagen.

Durch diese erfindungsgemäße Verbindung ist ein gleichmäßiger Fugenverlauf auch bei unterschiedlichen Wärmeausdehnungen geschaffen. Außerdem ist die Verbindung stabil, läßt sich jedoch zu Ersatzteilzwecken leicht lösen.

Damit bei Wärmeausdehnungen die Fuge zwischen dem Mutter- und Vaterteil blickdicht bleibt, sind vorteilhafterweise die Haltelaschen am Vaterteil über eine Rippe miteinander verbunden und diese Rippe ragt in eine korrespondierende Rinne im Überlappungsbereich des Mutterteils. Die Rippe dient hier als Sichtblende, wenn sich die Fuge ausweitet (Labyrinth).

Ferner sind bevorzugt in den Durchbrüchen im Überlappungsbereich des Mutterteils Noppen zur Positionierung der Haltelaschen des Vaterteils angeordnet. Durch diese Noppen wird das Vaterteil an die Fuge gedrückt.

Bevorzugt wird je Haltelasche ein Befestigungselement mit Federwirkung verwendet. Das Befestigungselement ist zweckmäßigerweise aus Federstahl gefertigt.

In bevorzugter Ausführungsform ist das Befestigungselement U-förmig geformt und weist eine obere Stirnfläche auf, in der ein Schlitz zur klemmenden Aufnahme der Haltelasche angeordnet ist. Zur Befestigung der Haltelaschen sind am Befestigungselement in den Schlitz hineinragende Schneidkanten angeordnet, die sich in die Haltelaschen des Vaterteils einschneiden.

Weiterhin sind erfindungsgemäß an den seitlichen Schenkeln des Befestigungselements federnde Füße angeordnet. Diese stützen sich auf dem Mutterteil ab.

Allgemein lassen sich Befestigungselemente dieser Art (Speedfix) nicht ohne Beschädigung des Aufsteckzapfens bzw. der Haltelaschen lösen. Durch die vorliegende U-förmige Ausführung des Befestigungselements ist jedoch ein Lösen ohne Beschädigung des Befestigungszapfens bzw. der Haltelasche möglich. Durch seitlichen Druck auf die zwischen den Federfüßchen angeordneten Flanken (Kombizange), öffnen sich die Schneidkanten und das Befestigungselement kann ohne Beschädigung des Aufsteckzapfens bzw. der Haltelasche abgezogen werden.

Weitere Merkmale der Erfindung ergeben sich aus den Unteransprüchen und der nachfolgenden Beschreibung eines Ausführungsbeispiels.

Es zeigen:
- Figur 1: eine Vorderansicht eines Kraftfahrzeuges mit Kunststoffteilen, die durch die erfindungsgemäße Verbindung verbunden sind,
- Figur 2: einen Schnitt nach der Linie II - II in Figur 1,
- Figur 3: die beiden Kunststoffteile ineinandergesteckt von oben,
- Figur 4: die beiden Kunststoffteile ineinandergesteckt von unten,
- Figur 5: eine getrennte Ansicht der beiden Kunststoffteile von unten auf die Verbindungsstelle,
- Figur 6: das Verbinden der beiden Kunststoffteile mit dem Befestigungselement,
- Figur 7: einen Ausschnitt von Figur 4,
- Figur 8: die Verbindung von unten mit aufgesetztem Befestigungselement,
- Figur 9: die fertige Verbindung im Schnitt und
- Figur 10: eine Ansicht nach der Linie X - X in Figur 9.

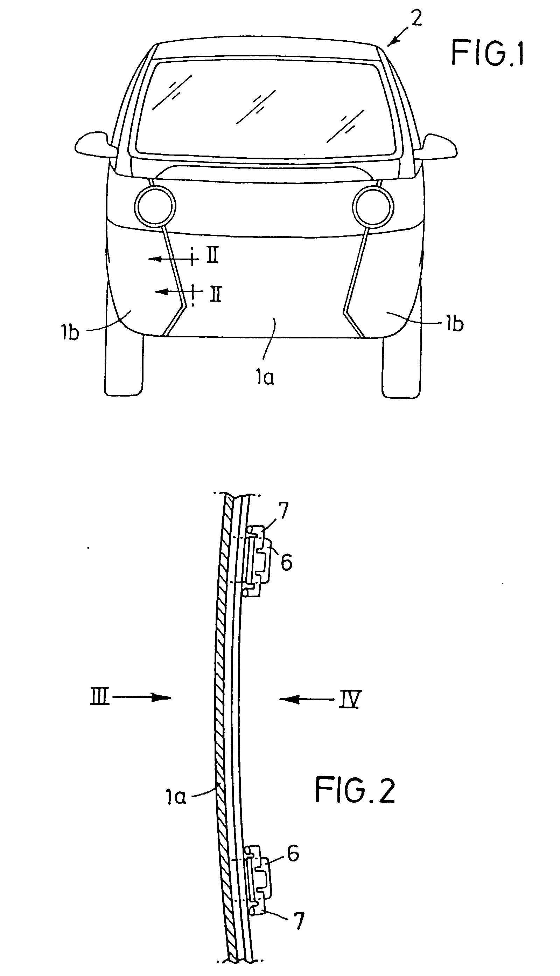

**Figur 1** zeigt die Vorderseite eines Kraftfahrzeugs 2 mit äußeren Karosserieelementen aus Kunststoff. Diese Kunststoffteile 1a, 1b sind miteinander über die nachfolgend beschriebene Vorrichtung verbunden. Diese Verbindung läßt sich jedoch auch bei anderen Anwendungen verwenden.

**Figur 2** zeigt einen Schnitt nach der Linie II - II in **Figur 1**. Es soll hier gezeigt werden, daß verschiedene Verbindungsstellen vorhanden sind und daß jedesmal ein Befestigungselement 7 verwendet wird. Die Außenansicht ist mit III und die Innenansicht mit IV bezeichnet.

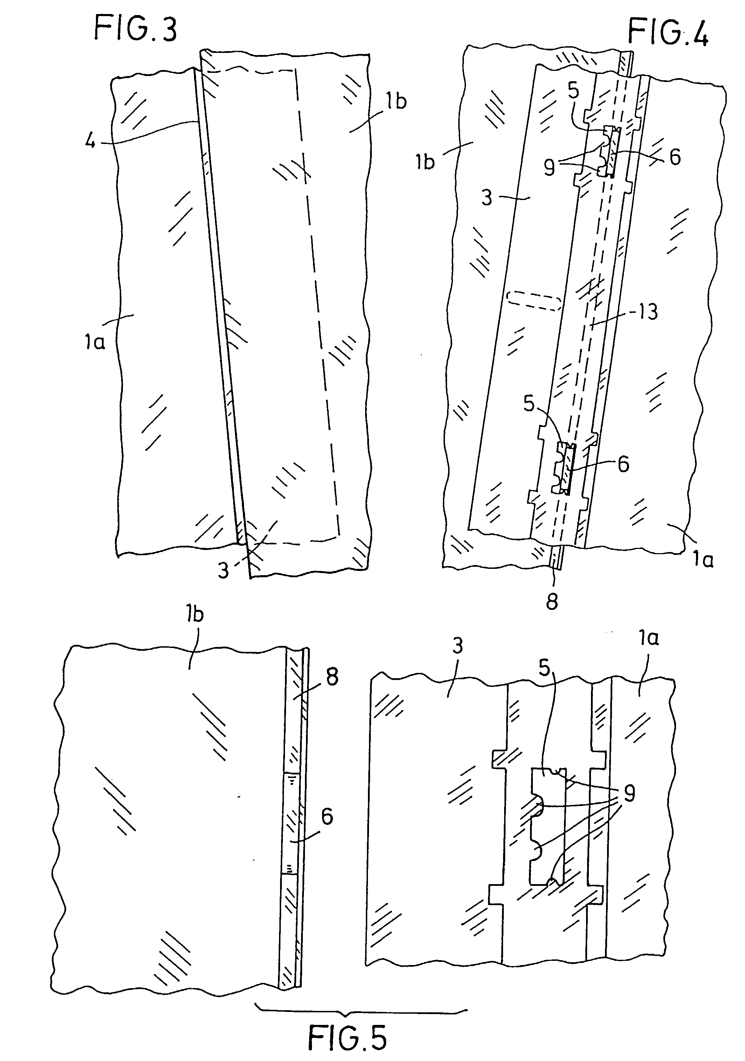

**Figur 3** zeigt die beiden zu verbindenden Kunststoffteile 1a, 1b ineinandergesteckt von oben bzw. von außen. Mit dem Bezugszeichen 1a ist ein Mutterteil bezeichnet, in das ein Vaterteil 1b eingesteckt wird und (hier nicht zu sehen) mittels einem Befestigungselement 7 gehalten wird. Mit "oben" ist die Oberseite, d.h. die glatte und schöne Seite der Kunststoffteile 1a, 1b verstanden. Ein wesentliches Merkmal der Verbindung ist, daß sich die beiden Kunststoffteile 1a, 1b überlappen, wobei der Überlappungsbereich 3 des Mutterteils 1a um die Materialdicke des Vaterteils 1b abgesenkt ist, so daß sich von oben bzw. von außen eine glatte Oberfläche ergibt. Zu sehen ist lediglich eine Fuge mit der Fugenkante 4 am Mutterteil 1a.

**Figur 4** zeigt die beiden Kunststoffteile 1a, 1b ineinandergesteckt von unten. Das Vaterteil 1b hat im Bereich der Fugenkante senkrechte Haltelaschen 6. Diese Haltelaschen 6 ragen in die Durchbrüche 5 im Mutterteil 1a. In den Durchbrüchen 5 sind Noppen 9 zur Positionierung der Haltelaschen 6 und damit des Vaterteils 1b auf dem Mutterteil 1a angeordnet. In der **Figur 4** sind noch keine Befestigungselemente 7 auf die Haltelaschen 6 aufgesetzt.

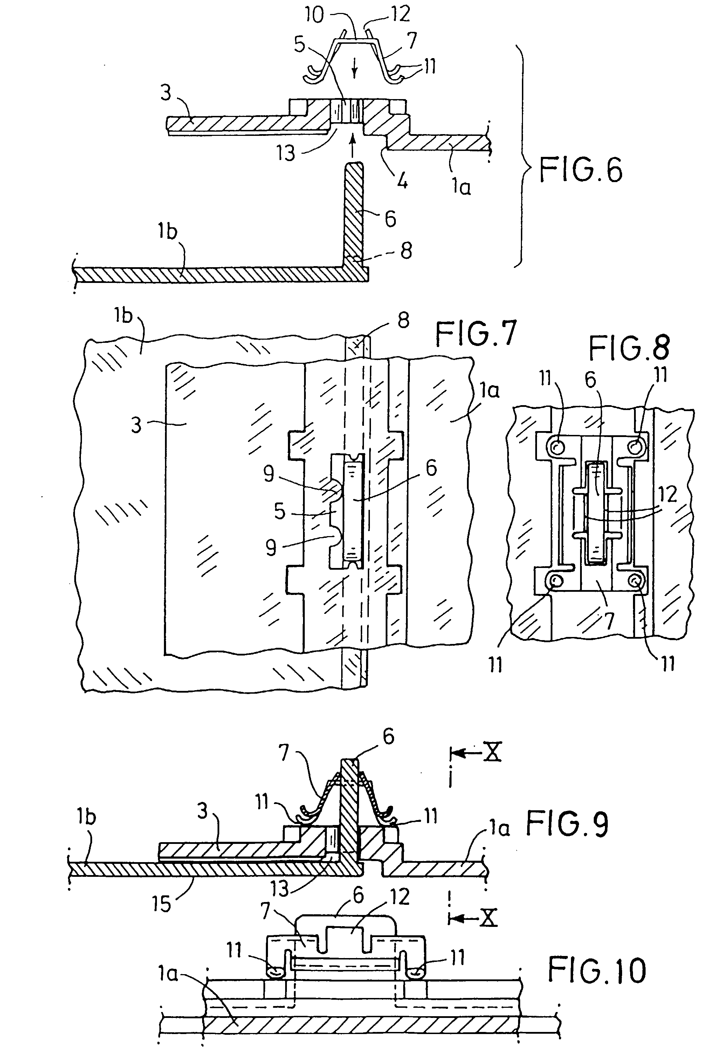

**Figur 5** zeigt eine getrennte Ansicht der beiden Kunststoffteile 1a, 1b von unten auf die Verbindungsstelle. Es ist gut zu erkennen, daß die Haltelaschen 6 am Vaterteil 1b über eine Rippe 8 miteinander verbunden sind. Diese Rippe 8 ragt in eine korrespondierende Fuge 13 im Überlappungsbereich 3 des Mutterteils 1a. In **Figur 4** ist diese Fuge 13 gestrichelt dargestellt. In den **Figuren 6** und **9** ist die Fuge 13 gut zu erkennen.

Die **Figur 7** zeigt die beiden Kunststoffteile 1a, 1b von **Figur 5** ineinandergesteckt.

Die **Figuren 6** und **9** demonstrieren das Verbinden der beiden Kunststoffteile 1a, 1b mit dem Befestigungselement 7 im Schnitt. Es ist gut zu erkennen, daß der Überlappungsbereich 3 des Mutterteils 1a um die Materialdicke des Vaterteils 1b abgesenkt ist. Hierdurch ergibt sich eine von außen glatte Oberfläche 15.

Das Befestigungselement 7 ist aus Federstahl gefertigt und drückt die beiden Kunststoffteile 1a, 1b aneinander. Hierzu ist das Befestigungselement 7 U-förmig geformt und weist eine obere Stirnfläche auf, in der ein Schlitz 10 zur klemmenden Aufnahme der Haltelasche 6 angeordnet ist. **Figur 8** zeigt die Verbindung von unten mit aufgesetztem Befestigungselement 7. In **Figur 10** ist zusätzlich eine Ansicht nach der Linie X - X in **Figur 9** gezeigt.

Das Befestigungselement 7 hat an den seitlichen Schenkeln federnde Füße 11, die sich auf dem Mutterteil 1a abstützen. Zur Befestigung an den Haltelaschen 6 des Vaterteils 1b sind am Befestigungselement 7 in den Schlitz 10 hineinragende Schneidkanten 12 angeordnet, die sich in die Haltelaschen 6 des Vaterteils 1b einschneiden. Hierdurch sitzt das Befestigungselement 7 fest auf der Haltelasche 6 und drückt mit den Füßen 11 das Mutterteil 1a an das Vaterteil 1b.

## Patentansprüche

1. Verbindung von zwei flächigen Kunststoffteilen (1a, 1b), insbesondere an Kraftfahrzeugen (2), bei der
sich die beiden Kunststoffteile (1a, 1b) im Verbindungsbereich überlappen, wobei der Überlappungsbereich (3) des Mutterteils (1a) um die Materialdicke des Vaterteils (1b) abgesenkt ist, so daß sich eine von Außen glatte Oberfläche (15) ergibt, dadurch gekennzeichnet,
- daß im Überlappungsbereich (3) des Mutterteils (1a) parallel zur Fugenkante (4) Durchbrüche (5) angeordnet sind,
- daß am Vaterteil (1b) im Bereich der Fugenkante senkrechte Haltelaschen (6) angeordnet sind, die durch die Durchbrüche (5) im Mutterteil (1a) ragen und daß im Überlappungsbereich (3) auf der Unterseite des Mutterteils (1a) Befestigungselemente (7) mit achsialer Federwirkung die Haltelaschen (6) in Verbindungsrichtung kraftbeaufschlagen.

2. Verbindung nach Anspruch 1,
dadurch gekennzeichnet, daß die Haltelaschen (6) am Vaterteil (1b) über eine Rippe (8) miteinander verbunden sind und diese Rippe (8) in eine korrespondierende Rinne (13) im Überlappungsbereich (3) des Mutterteils (1a) ragt.

3. Verbindung nach Anspruch 1 oder 2,
dadurch gekennzeichnet, daß in den Durchbrüchen (5) im Überlappungsbereich (3) des Mutterteils (1a) Noppen (9) zur Positionierung der Haltelaschen (6) des Vaterteils (1b) angeordnet sind.

4. Verbindung nach einem der Ansprüche 1 bis 3,
dadurch gekennzeichnet, daß je Haltelasche (6) ein Befestigungselement (7) verwendet wird.

5. Verbindung nach einem der Ansprüche 1 bis 4,
dadurch gekennzeichnet, daß das Befestigungselement (7) U-förmig geformt ist und eine obere Stirnfläche aufweist, in der ein Schlitz (10) zur klemmenden Aufnahme der Haltelaschen (6) angeordnet ist.

6. Verbindung nach Anspruch 5,
dadurch gekennzeichnet, daß an den seitlichen Schenkeln des Befestigungselements (7) federnde Füße (11) angeordnet sind.

7. Verbindung nach Anspruch 5 oder 6,
dadurch gekennzeichnet, daß am Befestigungselement (7) in den Schlitz (10) hineinragende Schneidkanten (12) angeordnet sind, die sich in die Haltelaschen (6) des Vaterteils (1b) einschneiden.

8. Verbindung nach einem der Ansprüche 1 bis 7,
dadurch gekennzeichnet, daß das Befestigungselement (7) aus Federstahl hergestellt ist.

## Claims

1. Connection of two flat plastics components (la, 1b), in particular on motor vehicles (2), in which
- the two plastics components (1a, 1b) overlap in the region of the connection, with the overlapping region (3) of the mother portion (1a) being lowered by the amount of the material thickness of the father portion (1b) so that a surface (15) which is flush on the outside results,
characterised
- in that openings (5) are arranged in the overlapping region (3) of the mother portion (la), parallel to the edge of the join (4),
- in that perpendicular holding clips (6) which project through the openings (5) in the mother portion (1a) are arranged on the father portion (1b), in the region of the edge of the join, and
- in that, in the overlapping region (3), on the underside of the mother portion (1a), there are fastening elements (7) with axial spring action which apply force to the holding clips (6) in the connection direction.

2. Connection according to claim 1, characterised in that the holding clips (6) on the father portion (1b) are connected to each other by way of a rib (8) and this rib (8) projects into a corresponding channel (13) in the overlapping region (3) of the mother portion (1a).

3. Connection according to claim 1 or 2, characterised in that arranged in the openings (5) in the overlapping region (3) of the mother portion (1a) are knubs (9) for the positioning of the holding clips (6) of the father portion (1b).

4. Connection according to one of claims 1 to 3, characterised in that one fastening element (7) is used per holding clip (6).

5. Connection according to one of claims 1 to 4, characterised in that the fastening element (7) is U-shaped and has an upper end face in which is arranged a slit (10) for receiving the holding clips (6) in a manner such that they are clamped.

6. Connection according to claim 5, characterised in that resilient feet (11) are arranged on the lateral limbs of the fastening element (7).

7. Connection according to claim 5 or 6, characterised in that cutting edges (12) which project into the slit (10) and cut into the holding clips (6) of the father portion (1b) are arranged on the fastening element (7).

8. Connection according to one of claims 1 to 7, characterised in that the fastening element (7) is produced from spring steel.

## Revendications

1. Connexion de deux éléments (1a, 1b) plans en matière plastique, en particulier sur des véhicules automobiles (2), dans laquelle les deux éléments en matière plastique (1a, 1b) se chevauchent dans la zone de connexion;
la zone de recouvrement (3) de l'élément femelle (1a) présentant un retrait de l'épaisseur de matière de l'élément mâle (1b) de manière à obtenir une surface lisse (15) côté extérieur,
caractérisée par le fait que
dans la zone de recouvrement (3) de l'élément femelle (1a), des ouvertures (5) sont aménagées parallèlement au bord de joint (4),
dans l'élément mâle (1b), des pattes de fixation (6) perpendicaulaires qui s'étendent à travers les ouvertures (5) dans l'élément femelle (1a) sont disposées dans la région du bord de joint et
dans la zone de recouvrement (3), sur la face inférieure de l'élément femelle (1a), des éléments de fixation (7) qui agissent élastiquement dans la direction axiale exercent une force sur les pattes d fixation (6) dans la direction de connexion.

2. Connexion selon la revendication 1, caractérisée par le fait que les pattes de fixation (6) sur l'élément mâle (1b) sont reliées entre elles par une nervure (8) et que ladite nervure (8) pénètre dans une rainure (13) associée prévue dans la zone de recouvrement (3) de l'élément femelle (1a).

3. Connexion selon la revendication 1 ou 2, caractérisée par le fait que des bossages (9) pour le positionnement des pattes de fixation (6) de l'élément mâle (1b) sont disposés dans les ouvertures (5) dans la zone de recouvrement (3) de l'élément femelle (1a).

4. Connexion selon une des revendications 1 à 3, caractérisée par le fait qu'on utilise un élément de fixation (7) pour chaque patte de fixation (6).

5. Connexion selon une des revendications 1 à 4, caractérisée par le fait que l'élément de fixation (7) a une forme de U et comporte une face frontale supérieure dans laquelle est aménagée une fente (10) pour recevoir en la bloquant la patte de fixation (6).

6. Connexion selon la revendication 5, caractérisée par le fait que des pieds (11) élastiques sont disposés sur les ailes latérales de l'élément de fixation.

7. Connexion selon la revendication 5 ou 6, caractérisée par le fait que des arêtes coupantes (12) qui font saillie dans la fente (10) et mordent dans les pattes de fixation de l'élément mâle (1b) sont prévues sur l'élément de fixation (7).

8. Connexion selon une des revendications 1 à 7, caractérisée par le fait que l'élément de fixation (7) est en acier à ressort.
